# EUROPÄISCHE PATENTSCHRIFT

(11) **EP 2 219 878 B1**
(45) Veröffentlichungstag und Bekanntmachung des Hinweises auf die Patenterteilung: **11.03.2015**
(21) Anmeldenummer: 08849037.0
(22) Anmeldetag: 05.11.2008
(51) Int. Cl.: B42D 25/24, B42D 25/305, B42D 25/309, B42D 25/391, G06K 19/077, G07F 7/08

(54) **DOKUMENT MIT EINER INTEGRIERTEN ANZEIGEVORRICHTUNG**
DOCUMENT COMPRISING AN INTEGRATED DISPLAY DEVICE
DOCUMENT COMPORTANT UN DISPOSITIF D'AFFICHAGE INTÉGRÉ

(30) Priorität: 12.11.2007 DE 102007000886
(43) Veröffentlichungstag der Anmeldung: 25.08.2010
(73) Patentinhaber: Bundesdruckerei GmbH, 10958 Berlin (DE)
(72) Erfinder: FRITZE, Frank, 12487 Berlin (DE); FISCHER, Jörg, 13053 Berlin (DE); PAESCHKE, Manfred, 16348 Wandlitz (DE); PFLUGHOEFFT, Malte, 13347 Berlin (DE); MUTH, Oliver, 12277 Berlin (DE)
(74) Vertreter: Richardt Patentanwälte PartG mbB
(86) Internationale Anmeldenummer: PCT/EP2008/064988
(87) Internationale Veröffentlichungsnummer: WO 2009/062870

(56) Entgegenhaltungen:
- EP-A1- 1 120 737
- WO-A-98/15418
- WO-A-2007/011490
- WO-A2-2004/090800
- DE-A1- 10 022 996
- FR-A- 2 918 311
- US-A1- 2005 057 036

## Beschreibung

Die Erfindung betrifft ein Dokument mit einer integrierten Anzeigevorrichtung, insbesondere ein Wert- oder Sicherheitsdokument.

Dokumente mit einer integrierten elektronischen Schaltung sind aus dem Stand der Technik an sich in verschiedener Form bekannt. Beispielsweise gibt es Wert- und Sicherheitsdokumente in überwiegend papierbasierter Form, wie zum Beispiel als Banknote, als elektronischer Reisepass, oder als kunststoffbasierte Chipkarte, insbesondere als sogenannte Smart Card, in kontaktbehafteter, kontaktloser oder Dual-Interface Ausführung. Hierzu wird insbesondere auf die DE 10 2005 025 806 verwiesen.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch ais RFID-Etikett, RFID-Chip, RFID-Tag, RFID-Label oder Funketikett bezeichnet; die Sende-Empfangseinheit wird auch als Lesegerät, Leseeinrichtung oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Desweiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente können eine integrierte Anzeigevorrichtung aufweisen, wie es z.B. aus DE 10 2005 030 626 A1, DE 10 2005 030 627 A1, DE 10 2005 030 628 A1, WO 2004/080100 A1, EP 1 023 692 B1, DE 102 15 398 B4, EP 1 173 825 B1, EP 1 230 617 B1, EP 1 303 835 B1, EP 1 537 528 B1, WO 03/030096 A1, EP 0 920 675 B1, US 6,019,284, US 6,402,039 B1, WO 99/38117 bekannt ist.

Aus dem Stand der Technik sind insbesondere bereits Chipkarten mit integrierter Anzeigevorrichtung bekannt. Die US 6,068,183 zeigt ein Chipkartensystem, das eine Anzeigevorrichtung zur Wiedergabe von Werbeinformationen aufweist, wobei die Chipkarte die Werbeinformationen von einer Datenquelle empfangen kann.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren sind zum Beispiel in der Norm ISO 14443 festgelegt.

Ein Nachteil solcher Dokumente mit RFID-Funktionalität ist, dass ohne Einverständnis des Trägers des Dokuments die RFID-Schnittstelle angesprochen werden kann. Ein Schutzmechanismus für Reisedokumente zum Schutz gegen unbefugtes Auslesen der Daten aus einem solchen Dokument ist als "Basic Access Control" bekannt, vgl. hierzu "Machine Readable Travel Document", Technical Report, PKI for Machine Readable Travel Documents Offering ICC Read-Only Access, Version 1.1, Oktober 01, 2004, International Civil Aviation Organisation (ICAO). Ein Verfahren für den besonderen Schutz biometrischer Daten, d.h. die sog. Extended Access Control, ist beispielsweise aus der oben bereits genannten DE 10 2005 025 806 bekannt.

Aus der zum Anmeldezeitpunkt unveröffentlichten Patentanmeldung DE 10 2006 031 422.0-53 derselben Anmelderin ist ein Wert- oder Sicherheitsdokument mit einer Anzeigevorrichtung zur Ausgabe eines maschinenlesbaren optischen Signals, welches durch einen Benutzer nicht kognitiv erfassbar ist, bekannt.

Aus der zum Anmeldezeitpunkt unveröffentlichten Patentanmeldung DE 10 2007 002 385.7-53 derselben Anmelderin ist ein Wert- oder Sicherheitsdokument mit einer Anzeigevorrichtung zur Ausgabe eines maschinenlesbaren optischen Signals in einem visuell nicht wahrnehmbaren spektralen Bereich bekannt.

Aus WO 2007/137555 A2 ist ein elektronisch konfigurierbares Kraftfahrzeug-Kennzeichen mit einem Display bekannt. Um das Kraftfahrzeug-Kennzeichen zu konfigurieren, werden Daten in einer externen Konfigurationseinheit zusammengestellt und verschlüsselt. Die verschlüsselten Daten werden von einem in die Konfigurationseinheit integrierten Infrarot-Sender als Infrarot-Signale ausgesendet. In der Anzeigeelektronik für das Kraftfahrzeug-Kennzeichen werden die Signale entschlüsselt, wofür eine entsprechende Entschlüsselungs-Software in der Anzeigeelektronik gespeichert ist. Weitere elektronische Kraftfahrzeug-Kennzeichen sind bekannt aus US 5,657,008 und US 2007/0285361 A1 (nach veröffentlicht). Die Druckschrift DE 100 22 996 A1 offenbart eine Vorrichtung zur Detektion von Sicherheitsmerkmalen auf Basis von flüssigkristallinen Materialien mit chiraler Phase. Dabei wird in ein flächiges Substrat eines Dokuments, beispielsweise einer Banknote ein Linearpolarisator und eine λ1/4-Verzögerungsfolie derart integriert, dass beim Falten des Substrats der Linearpolarisator und die λ1/4-Verzögerungsfolie derart in Deckung gebracht werden, dass je nach Faltrichtung des Substrats ein Zirkularpolarisator mit jeweils unterschiedlicher Polarisationsrichtung entsteht.

Die Druckschrift EP 1 120 737 A1 offenbart eine optische Sicherheitseinrichtungen mit einem Substrat, zumindest einer ersten optisch strukturierten Schicht, die derart ausgebildet ist, dass sie erste bis dritte optische Inspektionsebenen bereitstellt, und zwar eine erste Inspektionsebene, auf der eine erste optische Eigenschaft mit dem bloßen Auge erkannt werden kann, eine zweite Inspektionsebene, auf der ein Objekt mithilfe eines optischen Inspektionsmittels erkannt werden kann und eine dritte Inspektionsebene, auf der ein verschlüsseltes Objekt mit Hilfe einer entschlüsselnden Inspektionseinrichtung erkannt werden kann.

Die Druckschrift WO 2004/090800 A2 offenbart einen kontaktlosen Datenträger, wobei auf dem Datenträger angeordnete erste Daten über einen optischen Datenübertragungskanal und auf dem Datenträger angeordnete zweiten Daten über einen antennenbasierten Datenübertragungskanal an ein Lesegerät übertragbar sind. Dem gegenüber liegt der Erfindung die Aufgabe zu Grunde, ein verbessertes Dokument mit einer integrierten Anzeigevorrichtung zu schaffen.

Die der Erfindung zu Grunde liegende Aufgabe wird jeweils mit den Merkmalen des unabhängigen Patentanspruchs 1 gelöst. Bevorzugte Ausführungsformen der Erfindung sind in den abhängigen Patentansprüchen angegeben.

Ausführungsformen der Erfindung sind besonders vorteilhaft, da mit Hilfe des relativ zu der Anzeigevorrichtung bewegbaren optischen Filters eine Überprüfung der Echtheit der Anzeigevorrichtung möglich ist. Die von der Anzeigevorrichtung wiedergegebene Information wird nämlich nur dann visuell oder maschinell erfassbar, wenn sich der optische Filter in dem Strahlengang befindet.

Hierdurch unterscheidet sich die in das Dokument integrierte Anzeigevorrichtung von vorbekannten Anzeigevorrichtungen, so dass hierdurch ein Sicherheitsmerkmal und damit ein Schutz gegen Fälschungen des Dokuments gegeben ist. Von besonderem Vorteil ist dabei weiter, dass die von der Anzeigevorrichtung wiedergegebene Information nicht unmittelbar ohne Hilfsmittel sichtbar ist, wodurch ein besonderes Maß an Fälschungssicherheit gegeben ist.

Unter einem "Dokument" werden erfindungsgemäß Papier basierte und/oder Kunststoff basierte Dokumente verstanden, wie zum Beispiel Ausweisdokumente, insbesondere Reisepässe, Personalausweise, Visa, Führerscheine, Fahrzeugscheine, Fahrzeugbriefe, Firmenausweise oder andere ID-Dokumente, sowie auch Chipkarten, Zahlungsmittel, insbesondere Bankkarten und Kreditkarten, Frachtbriefe oder sonstige Berechtigungsnachweise.

Unter einem "Dokument" wird auch ein elektronisches Kennzeichen, insbesondere ein elektronisches Kraftfahrzeugkennzeichen, verstanden. Das Dokument kann auch einen integralen Bestandteil eines Transportmittels, insbesondere eines Kraftfahrzeugs, bilden. Beispielsweise kann das Dokument in die Front- bzw. Heckhaube bzw. in das sog. Frontend oder Backend integriert sein, indem dort ein Display erfindungsgemäß eingebracht oder aufgebracht wird.

Das Dokument kann auch metallbasiert sein, insbesondere blechbasiert; es kann also einen Dokumentenkörper aus Blech haben. Es kann aber auch ein Dokumentenkörper aus einem anderen Material haben, wie z.B. aus einem Verbundmaterial, wie er im Fahrzeugbau verwendet wird.

Unter "Bilddaten" werden hier alle Daten verstanden, die zur Erzeugung einer Bildwiedergabe auf der Anzeigevorrichtung des Dokuments vorgesehen sind, also zum Beispiel Daten einer digitalen Fotografie, eines anzuzeigenden Textes oder einer anderen bildlichen, symbolischen oder alphanumerischen Information, wie z.B. ein Kraftfahrzeugkennzeichen, eines Fahrzeugparameters und/oder eines Gebührenstatus.

Bei der in das Dokument integrierten Anzeigevorrichtung kann es sich z.B. um ein Aktiv- oder Passiv-Matrix-Display handeln. Insbesondere kann es sich bei der Anzeigevorrichtung um eine elektrophoretische oder elektrochrome Anzeige, eine bistabile Anzeige, eine Drehelementanzeige, insbesondere sog. elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Anzeige auf Basis interferometrischer Modulatorelernente (IMOD), eine Hybridanzeige oder eine Anzeige auf Basis eines flexiblen Displays, wie sie beispielsweise von der Firma Citala (www.citala.com) kommerziell erhältlich ist (vergleiche US 2006/0250535 A1 und WO 2007/054944), handeln.

Erfindungsgemäß ist der Filter mit dem Dokument beweglich verbunden. Beispielsweise kann der Filter an dem Dokument schwenkbar, drehbar oder verschiebbar angeordnet sein. Zur Überprüfung der Echtheit des Dokuments und zur Erfassung der von der Anzeigevorrichtung wiedergegebenen Information wird der Filter auf die Anzeigevorrichtung geklappt, gedreht oder geschoben.

Erfindungsgemäß ist das Dokument buchförmig ausgebildet, wie zum Beispiel als Passbuch. Die bei geschlossenem Dokument auf der Anzeigevorrichtung aufliegende Seite beinhaltet den optischen Filter. Wenn das Dokument an dieser Seite aufgeschlagen wird, kann also die Anzeigevorrichtung - je nach Ausführungsform - durch den Filter hindurch betrachtet oder durch einen Sensor maschinell erfasst werden.

Nicht erfindungsgemäß ist der optische Filter als von dem Dokument getrennte Komponente ausgebildet. Beispielsweise befindet sich diese Komponente im Besitz einer zur Kontrolle des Dokuments autorisierten Stelle, wie zum Beispiel eines Grenzbeamten. Zur Kontrolle des Dokuments wird diese Komponente in den Strahlengang zwischen Anzeigevorrichtung und dem Auge des Grenzbeamten oder dem Sensor eines Lesegeräts gebracht, um die Information visuell bzw. maschinell zu erfassen.

Nicht erfindungsgemäß ist die Anzeigevorrichtung als Flüssigkeitskristall-Anzeigevorrichtung ausgebildet. Die Flüssigkeitskristall-Anzeigevorrichtung hat einen unteren Polarisator, so dass in einer ersten Richtung polarisiertes Licht auf die Anzeigeelemente, die jeweils flüssige Kristalle beinhalten, trifft. Bei einer üblichen Flüssigkeitskristallvorrichtung, wie sie an sich aus dem Stand der Technik bekannt ist, befindet sich an deren Oberseite ein oberer Polarisator, der eine zweite Polarisationsrichtung hat, die senkrecht auf der Polarisationsrichtung des unteren Polarisators steht.

Den unteren Polarisator passiert also Licht der ersten Polarisationsrichtung. Diese Polarisationsrichtung wird durch ein Anzeigeelement der Flüssigkeitskristall-Anzeigevorrichtung je nach deren Ansteuerung nicht gedreht oder um 90° gedreht. Wenn keine Drehung stattfindet, so kann der Lichtstrahl nicht den oberen Polarisator passieren, da dieser ja eine zweite Polarisationsrichtung senkrecht zu der ersten Polarisationsrichtung hat. Wenn hingegen das Anzeigeelement so angesteuert wird, dass die Polarisationsrichtung um 90° gedreht wird, so kann der Lichtstrahl den oberen Polarisator passieren.

Im Gegensatz zum Stand der Technik haben Ausführungsformen einer Flüssigkeitskristall-Anzeigevorrichtung keinen oder keinen durchgehenden oberen Polarisator, das heißt, der obere Polarisator erstreckt sich zumindest nicht über einen Teilbereich der Anzeigevorrichtung. Wenn Anzeigeelemente in diesem Teilbereich zur Wiedergabe der Information angesteuert werden, so ist diese nicht visuell wahrnehmbar, da unabhängig von der Ansteuerung der Anzeigeelemente, die die Anzeigeelemente passierenden Strahlen aus der Oberfläche der Anzeigevorrichtung austreten und jeweils einen hellen Bildpunkt erzeugen. Der zweite Teilbereich erscheint also als einheitliche Fläche, ohne dass die Information visuell wahrnehmbar ist.

Zur Prüfung des Dokuments wird dieser Teilbereich der Anzeigevorrichtung durch den Filter betrachtet, der hier als Polarisator ausgebildet ist. Der Filter wird dabei so ausgerichtet, dass die Polarisationsrichtung des Filters senkrecht zu der ersten Polarisationsrichtung der Flüssigkeitskristall-Anzeigevorrichtung steht. Daher übernimmt der Filter die Funktion des oberen Polarisators der Flüssigkeitskristall-Anzeigevorrichtung, so dass die Information visuell wahrnehmbar ist.

Nicht erfindungsgemäß beinhaltet die Anzeigevorrichtung eine erste Teilmenge von Anzeigeelementen, die polarisiertes Licht einer ersten Polarisationsrichtung abgeben. Bei diesen Anzeigeelementen kann es sich um organische Light Emitting Diodes (OLEDs) handeln, die polarisiertes Licht abgeben, das heißt sogenannte polarized OLED's. Polarized OLED Anzeigeelemente sind an sich aus dem Stand der Technik bekannt, vgl. hierzu zum Beispiel US 7,037,599 B2 und Advanced Materials Matter 2003, 15, Nr. 14, 17. Juli, S. 1176 - 1180 sowie "New Fluorene Based Materials for Organic Electronics", Dissertation, Universität Bayreuth, 2005, Heiko Thiem.

Die Anzeigevorrichtung beinhaltet eine zweite Teilmenge von Anzeigeelementen, die zur Abgabe von nicht polarisiertem Licht ausgebildet sind. Bei der zweiten Teilmenge von Anzeigeelementen kann es sich um übliche OLED's handeln, die nicht polarisiertes Licht abgeben. Bei dieser Ausführungsform beinhaltet die Anordnung der Anzeigeelemente der ersten und zweiten Teilmengen in der Ebene der Anzeigevorrichtung die Information.

Beispielsweise wird durch die Anordnung von Anzeigeelementen der zweiten Teilmenge in der Ebene der Anzeigevorrichtung wird ein Muster gebildet. Dieses Muster erscheint dann, wenn der Filter in den Strahlengang gebracht wird, welcher hier als Polarisator ausgebildet ist. Die Polarisationsrichtung des Filters ist dabei der Polarisationsrichtung des von den Anzeigeelementen der ersten Teilmenge abgestrahlten polarisierten Lichts entgegen gesetzt.

Unter einer "entgegengesetzten Polarisationsrichtung" wird hier bei einer linearen Polarisierung verstanden, dass die ersten und zweiten Polarisationsrichtungen senkrecht aufeinander stehen und bei einer zirkularen Polarisierung, dass die Polarisierungen einen einander entgegengesetzten Richtungssinn aufweisen.

Von den Anzeigeelementen der ersten Teilmenge herrührendes polarisiertes Licht kann also den Filter nicht passieren, wohl aber von den Anzeigeelementen der zweiten Teilmenge abgestrahltes Licht, da dieses Licht nicht polarisiert ist. Aufgrund dessen erscheint das durch die Anordnung der Anzeigeelemente der zweiten Teilmenge gebildete Muster bei Betrachtung der Anzeigevorrichtung mit Hilfe des Filters.

Die Anzeigeelemente der ersten Teilmenge können eine höhere Effizienz aufweisen, als die Anzeigeelemente der zweiten Teilmenge, das heißt, bei gleicher Ansteuerung geben die Anzeigeelemente der ersten Teilmenge Licht einer größeren Intensität ab, als dies bei den Anzeigeelementen der zweiten Teilmenge der Fall ist. Diese Intensitätsunterschiede können durch die Ansteuerung der Anzeigeelemente, das heißt, beispielsweise in der Treiberschaltung oder durch Transformation der Bilddaten, kompensiert werden. Soll beispielsweise ein bestimmter Bildpunkt mit einem vorgegebenen Intensitätswert wieder gegeben werden, so wird dieser Intensitätswert um den Unterschied der Intensitäten der Anzeigeelemente der ersten und zweiten Teilmengen bei gleicher Ansteuerung korrigiert.

Erfindungsgemäß beinhaltet die Anzeigevorrichtung eine erste Teilmenge von Anzeigeelementen, die zur Abgabe von Licht in einem nicht wahrnehmbaren spektralen Bereich ausgebildet sind. Hierbei kann es sich beispielsweise um Anzeigeelemente handeln, die im NIR-, IR- oder UV-Bereich Strahlung emittieren. Die Anzeigevorrichtung hat ferner eine zweite Teilmenge von Anzeigeelementen, die zur Abgabe von Licht in einem sichtbaren Spektralbereich ausgebildet sind. Die Anzeigeelemente der ersten Teilmenge werden zur Wiedergabe der Information angesteuert. Diese Information ist ohne einen Filter nicht sichtbar, da die Wiedergabe ja in einem nicht wahrnehmbaren spektralen Bereich erfolgt. Der Filter dient hier zur Konversion des nicht wahrnehmbaren spektralen Bereichs in den wahrnehmbaren spektralen Bereich. Wird also der Filter über die Anzeigevorrichtung gebracht, so wird die Information für einen Betrachter sichtbar.

Zur Sichtbarmachung von IR-Strahlung ist der Filter als sogenannter upconversion Filter ausgebildet. Solche upconversion Filter sind an sich bekannt, beispielsweise aus US 5,003,179.

Wenn die Anzeigeelemente der zweiten Teilmenge zur Abgabe von Strahlung in dem UV-Bereich ausgebildet sind, so ist der Filter als sogenannter downconversion Filter ausgebildet. Solche downconversion Filter sind ebenfalls an sich aus dem Stand der Technik bekannt.

Nach einer weiteren Ausführungsform ist der upconversion bzw. der downconversion Filter so ausgebildet, dass er Licht in einem sichtbaren Spektralbereich nicht durchlässt. Aufgrund dessen wird also nur die über die Anzeigeelemente der ersten Teilmenge wiedergegebene Information sichtbar, wenn sich der Filter auf der Anzeigevorrichtung befindet, nicht aber die von den Anzeigeelementen der zweiten Teilmenge erzeugte Bildwiedergabe.

Nach einer Ausführungsform der Erfindung ist die Anzeigevorrichtung für eine farbliche Wiedergabe ausgebildet. Hierzu besteht jedes farbige Bildelement der Anzeigevorrichtung aus drei Anzeigeelementen der zweiten Teilmenge, wobei die einem Bildelement zugeordneten Anzeigeelemente nebeneinander angeordnet sind und unterschiedliche Farben aufweisen, wie zum Beispiel rot, grün und blau. Einige der Bildelemente haben ein zusätzliches viertes Anzeigeelement der ersten Teilmenge zur Emmission in dem nicht wahrnehmbaren spektralen Bereich.

Nach einer Ausführungsform der Erfindung beinhaltet die Anordnung der Anzeigeelemente der ersten und zweiten Teilmengen ein digitales Wasserzeichen, durch welches die Information codiert ist.

Digitale Wasserzeichen sind an sich aus dem Stand der Technik bekannt und werden üblicherweise drucktechnisch auf ein Dokument aufgebracht, wie es zum Beispiel aus DE 199 00 856 C2, EP 0 490 457 B1 und EP 0 961 239 A3 an sich bekannt ist. Beispielsweise kann ein digitales Wasserzeichen durch Texturierung der Mikrotopologie der Oberfläche einer Banknote aufgebracht werden.

Nach Ausführungsformen der Erfindung werden solche an sich aus der Drucktechnik bekannten Verfahren zur Erzeugung digitaler Wasserzeichen auf das Layout einer Anzeigevorrichtung angewendet, indem deren Mikrotopologie hinsichtlich der Anordnung der unterschiedlichen Anzeigeelemente der ersten und zweiten Teilmengen je nach der einzubringenden Information variiert wird. Diese Variation kann im Bildraum oder im Frequenzraum erfolgen, wie es an sich ebenfalls aus dem Bereich drucktechnisch aufgebrachter Wasserzeichen bekannt ist.

Nach einer Ausführungsform der Erfindung beinhaltet die Information einen Barcode, insbesondere einen eindimensionalen oder einen zweidimensionalen Barcode.

Dieser kann durch entsprechende Ansteuerung der Anzeigeelemente der ersten Teilmenge wiedergegeben werden.

Nach einer Ausführungsform der Erfindung handelt es sich bei der Information um einen kryptographischen Schlüssel. Beispielsweise beinhaltet das Dokument einen integrierten elektronischen Schaltkreis zur Speicherung von schutzbedürftigen Daten, insbesondere biometrischen Daten eines Trägers des Dokuments. Der integrierte elektronische Schaltkreis dient zur Ausführung eines kryptographischen Protokolls und hat eine Schnittstelle zu einem Lesegerät.

Nach einer Ausführungsform der Erfindung handelt es sich bei der Information um einen Fahrzeugparameter und/oder einen Gebührenstatus des Kraftfahrzeugs. Das Dokument, insbesondere in der Ausführungsform als elektronisches Kraftfahrzeugkennzeichen, kann an dem Kraftfahrzeug oder einem Kraftfahrzeugteil befestigt sein.

Bei dem Fahrzeugparameter kann es sich z.B. um die Geschwindigkeit des Kraftfahrzeugs, einen Lärmpegel oder einen Abgaswert handeln. Insbesondere kann durch die Information ausgegeben werden, welche Schadstoffklasse das Kraftfahrzeug erfüllt, insbesondere gemäß der anwendbaren Feinstaubverordnung;

Durch die Ausgabe des Gebührenstatus kann angezeigt werden, ob für das Kraftfahrzeug die vorgeschriebenen Gebühren, Steuern und/oder Abgaben, insbesondere Mautgebühren, Kraftfahrzeugsteuern und/oder Abgasgebühren, bezahlt worden sind.

Die Schnittstelle kann kontaktbehaftet, kontaktlos oder als so genanntes Dual-Mode-Interface ausgebildet sein. Die Schnittstelle kann auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein. Beispielsweise kann der integrierte elektronische Schaltkreis als so genanntes Funketikett ausgebildet sein, welches auch als RFID-Tag oder RFID Chip bezeichnet wird. Die Kommunikation mit dem Lesegerät kann über ein RFID-Verfähren erfolgen.

Für den Zugriff auf die in dem integrierten elektronischen Schaltkreis des Dokuments gespeicherten Daten muss das Lesegerät zunächst den kryptographischen Schlüssel von der Anzeigevorrichtung erfassen. Mit Hilfe dieses kryptographischen Schlüssels wird dann das kryptographische Protokoll ausgeführt. Die erfolgreiche Ausführung des kryptographischen Protokolls kann dann eine hinreichende oder notwendige Bedingung für ein Auslesen der Daten durch das Lesegerät sein. Ergänzend können weitere Sicherheitsvorkehrungen zum Schutz der Daten gegen unberechtigtes Auslesen vorgesehen sein, wie zum Beispiel nach einem Basic Access Control (BAC)- oder einem Extended Access Control (EAC)-Verfahren, wie es von der internationalen Luftfahrtbehörde (ICAO) spezifiziert ist.

Nicht erfindungsgemäß ist ein Lesegerät zum Lesen eines Dokuments. Das Lesegerät hat optische Sensormittel zur Erfassung der Information von der Anzeigevorrichtung des Dokuments, wobei dies voraussetzt, dass sich der Filter über der Anzeigevorrichtung befindet.

Das Lesegerät kann eine Schnittstelle zu einer entsprechenden Schnittstelle des Dokuments aufweisen, insbesondere eine RFID-Schnittstelle. Ferner hat das Lesegerät Mittel zur Ausführung eines kryptographischen Protokolls. Ein Zugriff des Lesegeräts auf in dem Dokument gespeicherte Daten kann nur dann erfolgen, wenn das Lesegerät zuvor einen kryptographischen Schlüssel von der Anzeigevorrichtung optisch erfasst, um auf dieser Basis zusammen mit dem Dokument das kryptographische Protokoll auszuführen. Bei der von der Anzeigevorrichtung wiedergegebenen Information kann es sich unmittelbar um den kryptographischen Schlüssel handeln.

Alternativ ist das Lesegerät dazu ausgebildet, aus der Information den kryptographischen Schlüssel abzuleiten. Hierzu kann das Lesegerät ein Chipkarten-Lesegerät aufweisen, so dass das Lesegerät Zugriff auf eine Chipkarte mit einem sogenannten Master Key erhält. Das Lesegerät übergibt die von der Anzeigevorrichtung erfasste Information an die Chipkarte, die aus dieser Information unter Zuhilfenahme des Master Keys den kryptographischen Schlüssel erzeugt und an das Lesegerät übergibt. Die Anzeigevorrichtung ist gegenüber Standard-Anzeigevorrichtungen individualisiert. Die Anzeigevorrichtung unterscheidet sich von Standard-Anzeigevorrichtungen dadurch, dass zumindest in einem Teilbereich eine von der Anzeigevorrichtung wiedergegebene Information nur dann visuell wahrnehmbar ist, wenn ein Filter über die Anzeigevorrichtung gebracht wird. Hierdurch ist ein Sicherheitsmerkmal gegeben, um die Authentizität des Dokuments zu überprüfen.

Beispielsweise kann es sich bei der Information um ein Symbol, Siegel oder Wappen handeln.

Das Lesegerät ist zur Erfassung des Dokuments eines vorbeifahrenden Transportmittels ausgebildet; dabei ist das Dokument beispielsweise als elektronisches Kraftfahrzeugkennzeichen ausgebildet. Das Lesegerät kann z.B. zur Erfassung eines Fahrzeugparameters, eines Fahrparameters oder eines Gebührenstatus des Kraftfahrzeugs dienen, insbesondere zur Durchführung von Verkehrskontrollen, Abgaskontrollen und/oder Gebührenkontrollen.

Ausführungsformen der Erfindung sind besonders vorteilhaft, da Personalisierungsinformationen in die Anzeigevorrichtung eingebracht werden können, beispielsweise über ein Muster der Anordnung der Anzeigeelemente der ersten und zweiten Teilmengen. Bei den Personalisierungsinformationen kann es sich zum Beispiel um eine Seriennummer des Dokuments, die ausstellende Behörde, die Gültigkeit des Dokuments und/oder benutzerspezifische Daten, wie zum Beispiel persönliche Angaben zu dem Träger des Dokuments und/oder biometrische Information, wie zum Beispiel Fingerabdruckdaten oder Iris-Scan-Daten handeln. Die Personalisierungsinformationen können auch Angaben zu einem Fahrzeug, insbesondere ein Kraftfahrzeugkennzeichen beinhalten.

Nicht erfindungsgemäß ist ein Sicherheitssystem, welches ein erfindungsgemäßes Dokument und ein dem Dokument zugeordneten Filter beinhaltet. Der Filter ist als von dem Dokument getrennte Komponente ausgebildet. Beispielsweise handelt es sich bei dem Dokument um ein Ausweisdokument, dass sich im Besitz seines Trägers befindet. Der Filter befindet sich dagegen im Besitz einer zur Überprüfung des Dokuments autorisierten Stelle, wie zum Beispiel eines Grenzbeamten. Das Dokument kann auch einer Sache, wie z.B. einem Transportmittel zugeordnet sein. Beispielsweise handelt es sich beim dem Dokument um ein elektronisches Kraftfahrzeugkennzeichen.

Nicht erfindungsgemäß ist ein Verfahren zur Prüfung der Echtheit eines erfindungsgemäßen Dokuments. Zur Prüfung der Echtheit des Dokuments wird ein dem Dokument zugeordneter Filter über die Anzeigevorrichtung gebracht, so dass die von der Anzeigevorrichtung wiedergegebene Information sichtbar wird und überprüft werden kann. Wenn die Information mit einer Referenz-Information übereinstimmt, wird das Dokument als echt angesehen. Zusätzlich können weitere Sicherheitsmerkmale für die Echtheitsprüfung herangezogen werden.

Im weiteren werden Ausführungsformen der Erfindung mit Bezugnahme auf die Zeichnungen näher erläutert. Es zeigen
- Figur 1: ein Blockdiagramm einer Ausführungsform eines erfindungsgemäßen Dokuments,
- Figur 2: ein Blockdiagramm einer weiteren Ausführungsform eines erfindungsgemäßen Dokuments,
- Figur 3: ein Blockdiagramm einer weiteren Ausführungsform eines erfindungsgemäßen Dokuments,
- Figur 4a: eine Draufsicht auf eine Ausführungsform eines erfindungsgemäßen Dokuments,
- Figur 4b: die Ansicht der Figur 4a, wobei mit Hilfe eines Filters eine von der Anzeigevorrichtung wiedergegebene Information visualisiert wird,
- Figur 5: eine Explosionsansicht einer Ausführungsform einer Flüssigkristall-Anzeigevorrichtung,
- Figur 6: eine schematische Draufsicht auf eine Ausführungsform einer Anzeigevorrichtung, bei der die Information als Muster in die Anordnung der Anzeigeelemente eingebracht ist,
- Figur 7: eine Explosionsansicht einer weiteren Ausführungsform einer Anzeigevorrichtung,
- Figur 8: ein Ausführungsbeispiel für eine von der Anzeigevorrichtung der Figur 7 wiedergegebene Information.

Elemente der nachfolgenden Figuren, die einander entsprechen, sind jeweils mit denselben Bezugszeichen gekennzeichnet.

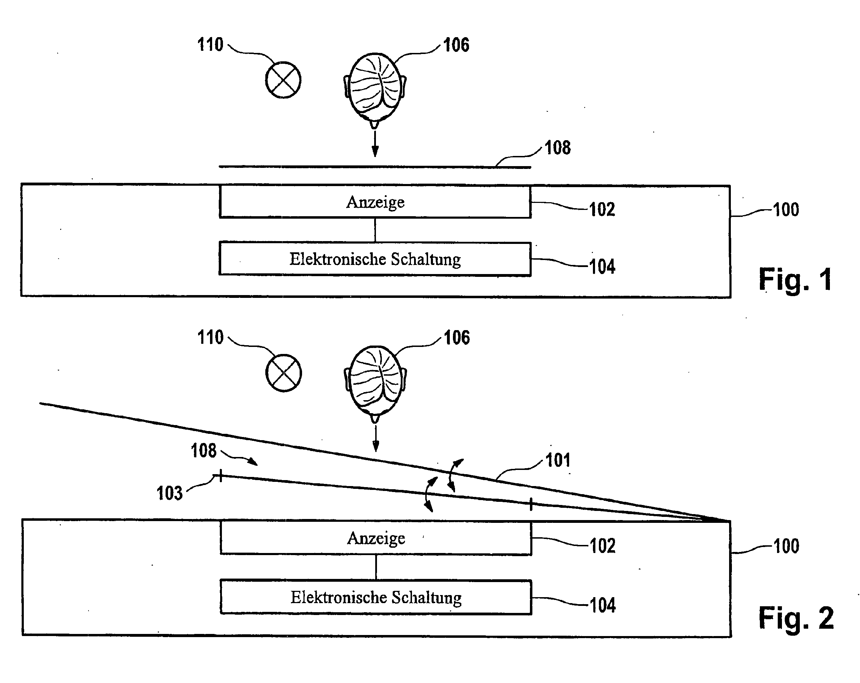

Die Figur 1 zeigt ein Dokument 100 mit einer in den Dokumentenkörper des Dokuments 100 integrierten Anzeige 102 und einer elektronischen Schaltung 104 zur Ansteuerung der Anzeige 102. Die Anzeige 102 beinhaltet eine Vielzahl von Anzeigeelementen, die beispielsweise im wesentlichen matrixförmig angeordnet sind.

Die Anzeige 102 ist zumindest in einem Teilbereich so ausgebildet, dass eine dort von der Anzeigevorrichtung wiedergegebene Information für einen Benutzer 106 visuell mit dem bloßen Auge nicht wahrnehmbar ist. Eine visuelle Wahrnehmung der Information durch den Benutzer 106 ist nur möglich, wenn ein optischer Filter 108 in den Strahlengang gebracht wird, wie in der Figur 1 gezeigt, indem der optische Filter beispielsweise auf die Oberseite der Anzeige 102 gelegt wird. Zur Betrachtung der Anzeige 102 kann eine externe Lichtquelle 110 erforderlich sein, insbesondere dann, wenn es sich bei der Anzeige 102 um eine reflektive Anzeigevorrichtung handelt.

Bei dem Filter 108 kann es sich um eine von dem Dokument 100 getrennte Komponente handeln. Beispielsweise handelt es sich bei dem Dokument 100 um ein Ausweisdokument, dass sich im Besitz von dessen Träger befindet, wohingegen sich der Filter 108 in Besitz einer für die Überprüfung des Dokuments 100 autorisierten Behörde befindet. Zur Überprüfung des Dokuments hält zum Beispiel ein Grenzbeamter den Filter 108 auf die Anzeige 102, wie in der Figur 1 gezeigt, um die Wiedergabe der Information durch die Anzeige 102 zu überprüfen. Wenn die korrekte Information, wie zum Beispiel ein Siegel, Wappen oder eine Personalisierungsinformation korrekt wiedergegeben wird, gilt die Überprüfung als erfolgreich.

Der Filter 108 kann auch einen integralen Bestandteil des Dokuments 100 bilden. Figur 2 zeigt eine diesbezügliche buchartige Ausführung des Dokuments 100, wobei es sich beispielsweise um ein Passheft handeln kann. Das Passheft hat einen aufklappbaren Einbanddeckel 101. Zwischen dem Einbanddeckel 101 und der Oberfläche der Anzeige 102 können sich ein oder mehrere Seiten des Dokuments befinden. Die im geschlossenen Zustand des Dokuments 100 auf der Oberseite der Anzeige 102 aufliegende Seite 103 des Dokuments 100 trägt in dieser Ausführungsform den Filter 108. Zur Überprüfung der Information wird bei dieser Ausführungsform also das Dokument an seiner Seite 103 aufgeschlagen, so dass der Filter 108 auf der Oberseite der Anzeige 102 aufliegt.

Alternativ zu einer klapp- oder schwenkbaren Verbindung des Filters 108 mit dem Dokumentenkörper des Dokuments 100, wie in der Figur 2 gezeigt, kann auch eine andere Art der beweglichen Verbindung des Filters 108 mit dem Dokumentenkörper gewählt werden, wie zum Beispiel eine verschiebbare Anordnung des Filters 108 oder eine drehbare Anordnung.

Der Filter 108 kann also wahlweise in eine erste oder eine zweite Position gebracht werden, wobei sich der Filter in der ersten Position über der Anzeigevorrichtung befindet, und wobei sich der Filter in der zweiten Position außerhalb des Strahlengangs der Anzeigevorrichtung befindet. Bei der hier betrachteten Ausführungsform befindet sich der Filter in der ersten Position, wenn das Dokument auf seiner Seite 103 aufgeschlagen ist. Sonst befindet sich der Filter in einer zweiten Position.

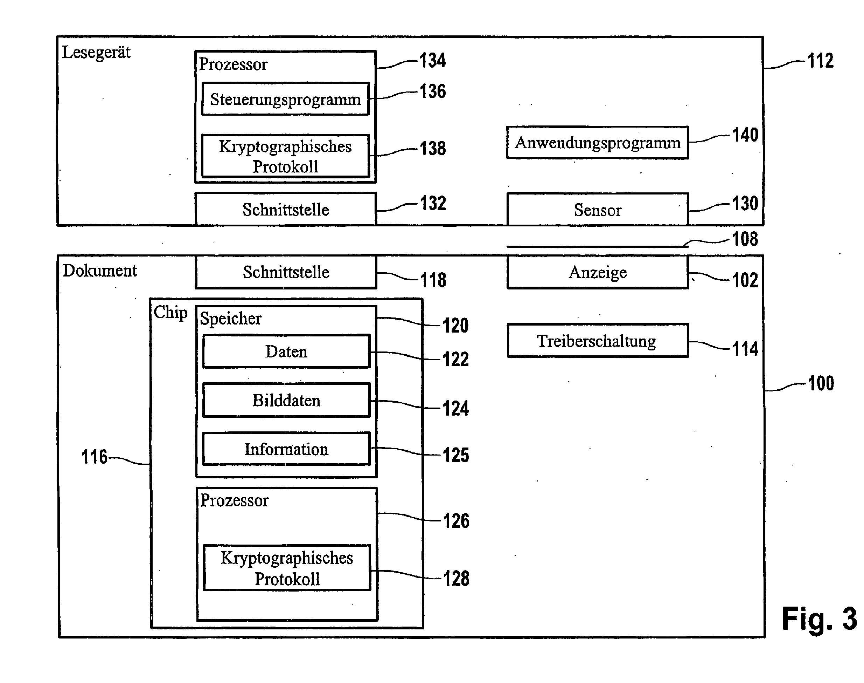

Die Figur 3 zeigt eine Ausführungsform des Dokuments 100, die so ausgebildet ist, dass die Information von der Anzeige 102 maschinell mit Hilfe eines Lesegeräts 112 erfasst werden kann.

Das Dokument 100 hat eine Treiberschaltung 114 zur Ansteuerung der Anzeige 102. Das Dokument 100 hat ferner einen Chip 116, der insbesondere als RFID-Chip ausgebildet sein kann. Der Chip 116 ist mit einer Schnittstelle 118 zur Kommunikation mit dem Lesegerät 112 verbunden. Die Schnittstelle 118 kann beispielsweise ein oder mehrere Antennenwindungen aufweisen. Insbesondere durch den Chip 116 wird hier also die elektronische Schaltung 104 des Dokuments 100 gebildet.

Der Chip 116 hat einen elektronischen Speicher 120 zur Speicherung von schutzbedürftigen Daten 122. Bei den Daten 122 kann es sich beispielsweise um biometri sche Daten des Trägers des Dokuments 100, wie zum Beispiel Fingerabdruckdaten oder Iris-Scan-Daten handeln. Ferner sind in dem Speicher 120 Bilddaten 124 und Bilddaten 125 gespeichert, die zur Wiedergabe durch die Anzeige 102 vorgesehen sind. Bei den Bilddaten 124 kann es sich um ein oder mehrere Gesichtsbilder des Trägers des Dokuments handeln. Bei den Bilddaten 125 kann es sich z.B um ein Wappen oder Siegel handeln oder um Personalisierungsinformationen, beispielsweise in Form eines Barcodes. Insbesondere beinhalten die Bilddaten 125 bei dieser Ausführungsform einen kryptographischen Schlüssel für die Durchführung eines kryptographischen Protokolls. Insbesondere kann es sich hierbei um einen symmetrischen oder um einen asymmetrischen kryptographischen Schlüssel handeln. Insbesondere bei Ausführung des Dokuments 100 als elektronisches Kraftfahrzeugkennzeichen kann es sich bei den Bilddaten 124 um das amtliche Kennzeichen des Kraftfahrzeugs und bei den Bilddaten 125 um eine weitere Information, wie z.B. einen Fahrzeugparameter und/oder einen Gebührenstatus, handeln. Diese weitere Information kann alternativ oder zusätzlich auch Teil der Bilddaten 124 sein.

Der Chip 116 hat ferner einen Prozessor 126 zur Ausführung von Programminstruktionen 128, durch die die das Dokument 100 betreffenden Schritte eines kryptographischen Protokolls implementiert werden.

Das Lesegerät 112 hat einen optischen Sensor 130 zur Erfassung einer Bildwidergabe der Anzeige 102. Bei dem optischen Sensor 130 kann es sich um einen CCD-Sensor oder einen Scanner handeln.

Der Sensor 130 ist so ausgebildet, dass die Erfassung der in den Bilddaten 125 beinhalteten Information nur dann erfolgen kann, wenn sich der Filter 108 in dem Strahlengang zwischen der Anzeige 102 und dem Sensor 130 befindet.

Das Lesegerät 112 hat ferner eine Schnittstelle 132, die der Schnittstelle 118 des Dokuments entspricht. Beispielsweise ist also die Schnittstelle 132 für eine RFID-Kommunikation mit dem Dokument 100 bzw. dessen Chip 116 ausgebildet.

Das Lesegerät 112 hat zumindest einen Prozessor 134 zur Ausführung eines Steuerungsprogramms 136 sowie von Programminstruktionen 138, durch die die das Lesegerät 112 betreffenden Schritte des kryptographischen Protokolls implementiert werden. Das Lesegerät 112 kann ferner zur Ausführung eines Anwendungsprogramms 140 dienen. Das Anwendungsprogramm 140 kann auch von einem anderen Computersystem ausgeführt werden, welches mit dem Lesegerät 112 verbunden ist.

Die Anzeige 102 wird von der Treiberschaltung zur Wiedergabe der Bilddaten 124 und 125 angesteuert. Zum Zugriff auf die Daten 122 erfasst das Lesegerät 112 zunächst mittels seines optischen Sensors 130 die Bildwiedergabe der Anzeige 102. Hierzu wird der Sensor 130 entsprechend von dem Steuerungsprogramm 136 angesteuert. Das Steuerungsprogramm 136 extrahiert die in der Bildwiedergabe beinhaltete Information.

Die Information kann in codierter Form vorliegen, beispielsweise in Form eines digitalen Wasserzeichens oder als Barcode. In diesem Fall decodiert das Lesegerät 112 die Information. Auf diese Art und Weise erhält das Steuerungsprogramm 136 Kenntnis des kryptographischen Schlüssels.

Das Steuerungsprogramm 136 startet daraufhin die Ausführung der Programminstruktionen 138, sodass das kryptographische Protokoll zwischen dem Lesegerät 112 und dem Dokument 100 mit Hilfe des kryptographischen Schlüssels durchgeführt wird. Beispielsweise handelt es sich bei dem kryptographischen Protokoll um ein Challenge-Response-Verfahren.

Das Challenge-Response-Verfahren kann beispielsweise so ablaufen; dass das Lesegerät 112 zunächst eine Anforderung der Daten an die Schnittstelle 118 des Dokuments 100 sendet. Daraufhin wird die Ausführung der Programminstruktionen 128 gestartet. Hierdurch wird zum Beispiel eine Zufallszahl generiert, die mit einem Referenzwert des kryptographischen Schlüssels symmetrisch verschlüsselt wird, so dass ein Chiffrat resultiert. Die verschlüsselte Zufallszahl wird von der Schnittstelle 118 des Dokuments 100 an die Schnittstelle 132 des Lesegeräts 112 gesendet.

Durch Ausführung der Programminstruktionen 138 wird seitens des Lesegeräts das von dem Dokument 100 empfangene Chiffrat mit Hilfe des zuvor aus dem Layout der Anzeige 102 gewonnenen kryptographischen Schlüssels entschlüsselt. Das Resultat der Entschlüsselung wird von der Schnittstelle 132 an die Schnittstelle 118 des Lesegeräts 112 gesendet.

Mit Hilfe der Programrninstruktiorien 128 wird dann seitens des Dokuments 100 geprüft, ob das Ergebnis der Entschlüsselung des Chiffrats, welche das Dokument von dem Lesegerät 112 empfangenen hat, identisch ist mit der initial durch das Dokument 100 erzeugten Zufallszahl: Wenn dies der Fall ist, stimmt der Referenzwert des kryptographischen Schlüssels, der in den Programminstruktionen 128 beinhaltet ist, oder auf den diese zugreifen können, mit dem von dem Layout der Anzeigeelemente der Anzeige 102 durch das Lesegerät 112 erfassten kryptographischen Schlüssels überein, wodurch die Authentizität des Dokuments 100 und die Zugriffsberechtigung des Lesegeräts 112 nachgewiesen ist.

Das Dokument 100 überträgt daraufhin die von dem Lesegerät 112 angeforderten Daten 122 von der Schnittstelle 118 zu der Schnittstelle 132. Diese Daten 122 können von dem Steuerungsprogramm 136 an das Anwendungsprogramm 140 für eine Weiterverarbeitung übertragen werden. Beispielsweise werden die Daten 122 auf einer Bildschirmmaske ausgegeben.

Bei der Information, die von der elektronischen Schaltung 104 in Form der Bilddaten 124 und/oder 125 über die Anzeige 102 ausgegeben wird, kann es sich auch um einen Fahrzeugparameter und/oder einen Gebührenstatus handeln. Bei dieser Ausführungsform ist das Dokument 100 als elektronisches Kraftfahrzeug-Kennzeichen ausgebildet, welches an einem Kraftfahrzeug angebracht ist oder welches einen integralen Bestandteil des Kraftfahrzeugs bildet.

Beispielsweise kann die elektronische Schaltung 104 eine Schnittstelle zu einem Kraftfahrzeug-Elektronikgerät aufweisen, welches die auszugebende Information an die Schnittstelle der elektronischen Schaltung 104 in regelmäßigen oder unregelmäßigen Zeitabständen sendet. Bei dem Kraftfahrzeug-Elektronikgerät kann es sich beispielsweise um eine sogenannte Electronic Control Unit (ECU) handeln. Das Kraftfahrzeug-Elektronikgerät kann über ein Kraftfahrzeug-Bussystem mit der elektronischen Schaltung 104 vernetzt sein, um über das Kraftfahrzeug-Bussystem die auszugebende Information zu übertragen.

Beispielsweise kann das Kraftfahrzeug-Elektronikgerät zur Erfassung eines Fahrzeug-Parameters dienen, und zwar auf der Basis von Sensorsignalen. Beispielsweise dient ein Sensor zur Erfassung eines aktuellen Abgaswerts des Kraftfahrzeugs. Dieser aktuelle Abgaswert wird in Form einer Information von dem Kraftfahrzeug-Elektronikgerät an die elektronische Schaltung 104 übertragen, sodass der Abgaswert über die Anzeige 102 ausgegeben wird. Entsprechend kann für weitere Fahrzeugparameter, wie zum Beispiel die Geschwindigkeit, den aktuell von dem Kraftfahrzeug erzeugten Lärmpegel oder andere Umwelt- und/oder sicherheitsrelevante Fahrzeugparameter verfahren werden.

Alternativ oder zusätzlich ist das Kraftfahrzeug-Elektronikgerät zur Bestimmung eines Gebührenstatus ausgebildet. Beispielsweise wird durch das Kraftfahrzeug-Elektronikgerät festgestellt, ob eine erforderliche Gebühr, wie zum Beispiel eine Mautgebühr, eine Steuer oder eine Abgasgebühr, für das Kraftfahrzeug entrichtet worden ist oder zu entrichten ist. Eine entsprechende Information, die den Gebührenstatus angibt, wird von dem Kraftfahrzeug-Elektronikgerät an die elektronische Schaltung 104 ausgegeben, sodass diese Information über die Anzeige 102 ausgegeben wird.

Dementsprechend kann das Lesegerät 112 zur Erfassung der Information, die über die Anzeige 102 ausgegeben wird, von dem stehenden und/oder von dem fahrenden Kraftfahrzeug ausgebildet sein. Das Lesegerät 112 kann über ein Netzwerk mit einem zentralen Servercomputer verbunden sein, in dem die von der Anzeige 102 erfasste Information ausgewertet wird.

Bei den Daten 124 kann es sich hier um das amtliche Kraftfahrzeug-Kennzeichen handeln. Auf der Anzeige 102 wird also visuell sichtbar das amtliche Kraftfahrzeug-Kennzeichen ausgegeben sowie zusätzlich eine oder mehrere weitere Informationen, die visuell ohne den Filter nicht wahrnehmbar sind.

Bei dieser Ausführungsform kann eine Aktualisierung des amtlichen Kennzeichens dadurch erfolgen, dass eine Aktualisierung der Daten 124 vorgenommen wird, beispielsweise indem Daten, die das aktualisierte amtliche Kennzeichen beinhalten, von dem Kraftfahrzeug-Elektronikgerät über das Kraftfahrzeug-Bussystern an die elektronische-Schaltung 104 gesendet werden, welches die Daten 124 dann mit den empfangenen Daten überschreibet.

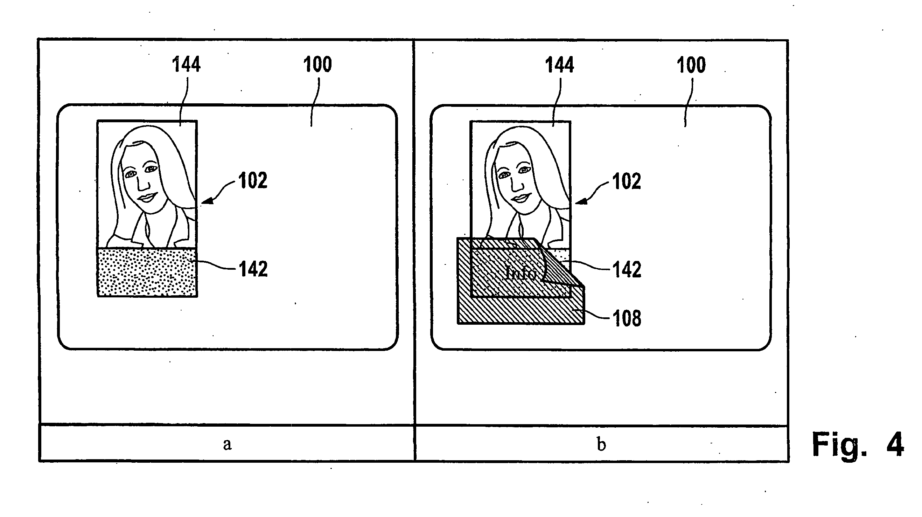

Die Figur 4a zeigt eine Ausführungsform des Dokuments 100 mit einer Anzeige 102, die einen ersten Teilbereich 142 und einen zweiten Teilbereich 144 aufweist. Der Teilbereich 142 ist so ausgebildet, dass ein aus diesem Teilbereich von der Anzeige 102 wiedergegebene Information visuell nur mit Hilfe des Filters 108 (vgl. Ausführungsformen der Figuren 1, 2 und 3) wahrnehmbar ist. Ohne den Filter 108 erscheint der Teilbereich 142 der Anzeige 102 beispielsweise als weiße oder graue Fläche.

In dem Teilbereich 144 ist die Anzeige 102 so ausgebildet, dass die dortige Bildwiedergabe ohne optische Hilfsmittel mit dem bloßen Auge wahrgenommen werden kann. Beispielsweise steuert die Treiberschaltung 114 (vgl. Ausführungsform der Figur 3) die Anzeige 102 so an, dass die Bilddaten 124, bei denen es sich beispielsweise um ein Gesichtsbild handelt, in dem Teilbereich 144 der Anzeige 102 wiedergegeben werden, wohingegen die Bilddaten 125, die die Information beinhalten, auf den Teilbereich 142 wiedergegeben werden.

Zur Visualisierung der Informationen wird der Filter 108 beispielsweise in Form einer Folie auf den Teilbereich 142 gebracht, wie in der Figur 4b gezeigt. Hierdurch wird die in den Bilddaten 125 beinhaltete Information visuell wahrnehmbar für einen Benutzer von der Anzeige 102 wiedergegeben. Diese Information ist in der Figur 4b durch den Schriftzug "Info" repräsentiert.

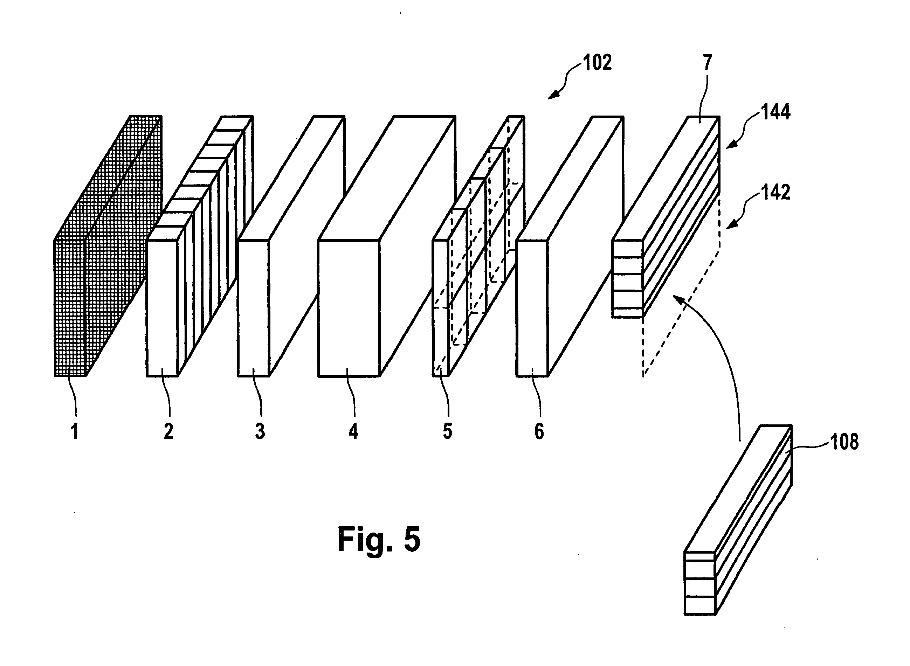

Die Figur 5 zeigt eine Ausführungsform der Anzeige 102 als monochrome Flüssigkeitskristallanzeige. Die Anzeigevorrichtung 102 hat einen Reflektor 1, vor dem ein unterer Polarisator 2 einer ersten Polarisationsrichtung angeordnet ist. Auf den Polarisator 2 folgt ein Substrat 3 mit einer transparenten Rückelektrode. Auf dem Substrat 3 befindet sich eine flüssigkristalline Schicht, auf der sich eine strukturierte Elektrode 5 befindet.

In der hier gezeigten Ausführungsform beinhaltet die strukturierte Elektrode 5 acht ansteuerbare Teilelektroden, die entsprechenden Bildpunkten, sogenannten Pixeln, der Anzeige 102 entsprechen. Auf der Elektrode 5 befindet sich ein transparentes Substrat 6, gefolgt von einem oberen Polarisator 7, einer zweiten Polarisationsrichtung, die im wesentlichen senkrecht auf der ersten Polarisationsrichtung des unteren Polarisators 2 steht. Der Polarisator 7, der die Oberseite der Anzeige 102 bildet, erstreckt sich über deren Teilbereich 144 (vgl. Figur 4).

Da in dem Teilbereich 142, also zunächst kein oberer Polarisator vorhanden ist, erscheint dieser Teilbereich 142 als einheitlich weiße oder graue Fläche. Um die von den Pixeln in dem Teilbereich 142 wiedergegebene Information zu visualisieren, wird der Filter 108 auf den Teilbereich 142 der Anzeige 102 gebracht. Der Filter 108 ist hier ähnlich wie der obere Polarisator 7 ausgebildet, das heißt, es handelt sich um einen Polfilter. Der Filter 108 wird in dem Teilbereich 142 so ausgerichtet, dass er in der zweiten Polarisationsrichtung, die auch der Polarisator 7 hat, die Strahlung polarisiert. Wenn sich der Filter 108 auf den Teilbereich 142 befindet, wird also die dort wiedergegebene Information visuell wahrnehmbar.

Anstelle der in der Figur 5 gezeigten reflektiven Ausführungsform, kann die Anzeigevorrichtung 102 basierend auf der LCD-Technologie auch transmissiv ausgebildet sein, indem der Reflektor 1 durch einen Emitter ersetzt wird.

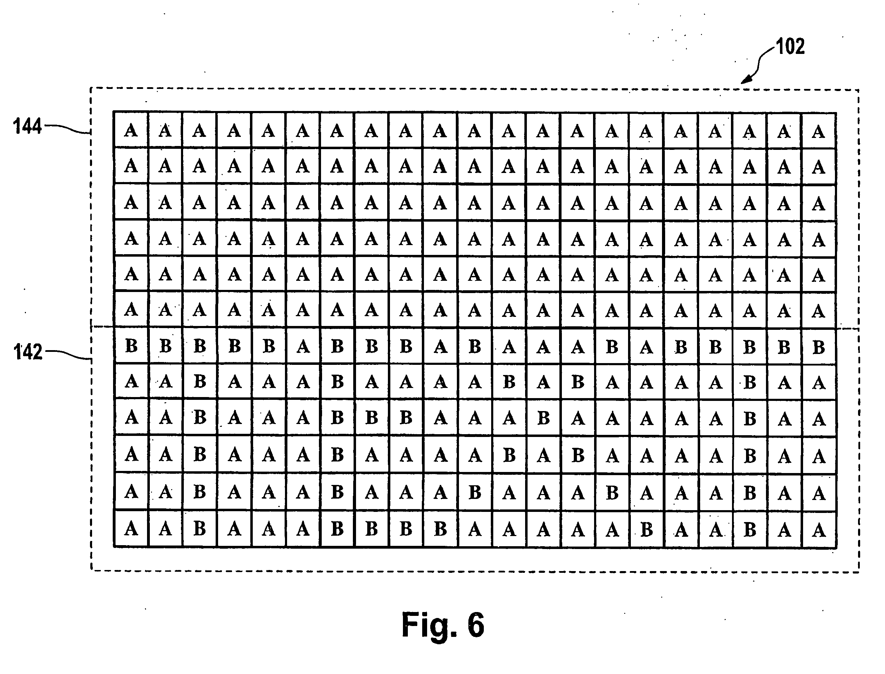

Die Figur 6 zeigt eine Ausführungsform der Anzeige 102. Diese Ausführungsform der Anzeige 102 beinhaltet zwei verschiedene Typen von Anzeigeelementen, die als "A" und "B" "in der Figur 6 gezeigt sind. Diese Anzeigeelemente sind in einer Matrix angeordnet.

Die Anzeigeelemente A sind so ausgebildet, dass sie polarisiertes Licht einer ersten Polarisationsrichtung abgeben. Beispielsweise handelt es sich bei den Anzeigeelementen A um sogenannte polarized OLED Anzeigeelemente.

Die Anzeigeelemente vom Typ B sind dagegen zur Abgabe von nicht polarisiertem Licht ausgebildet. Beispielsweise handelt es sich bei den Anzeigeelementen B um übliche OLED-Anzeigeelemente, die nicht polarisiertes Licht abgeben.

Der Teilbereich 144 der Anzeige 102 wird ausschließlich durch Anzeigeelemente A gebildet. Der Teilbereich 142 der Anzeige 102.beinhaltet.dagegen neben den Anzeigeelementen A auch Anzeigeelemente B. Die Anzeigeelementen B sind so angeordnet, dass sie ein Muster oder einen Text bilden. Hierbei handelt es sich in der Ausführungsform der Figur 6 um die Angabe "TEXT".

Bei dieser Ausführungsform kann die Speicherung der Bilddaten 125 (vgl. Ausführungsform der Figur 3), die die Information beinhalten, entfallen, da die Information in der Anordnung der Anzeigeelemente A und B in dem Teilbereich 142 beinhaltet ist. Wenn die Anzeigevorrichtung 102 in der Ausführungsform der Figur 6 zur Wiedergabe der Bilddaten 124 in den Teilbereichen 142 und 144 angesteuert wird, so werden diese Bilddaten von den Anzeigeelementen A und B wiedergegeben. Die Information "TEXT" in dem Teilbereich 142 ist visuell durch einen Benutzer nicht oder kaum wahrnehmbar, da das von den Anzeigeelementen A abgestrahlte polarisierte Licht und das von den Anzeigeelementen B abgestrahlte nicht polarisierte Licht bei einem Benutzer im wesentlichen denselben visuellen Eindruck erzeugt.

Allerdings kann es zwischen den Anzeigeelementen A und B zu Intensitätsunterschieden kommen, da die Anzeigeelemente A eine größere Effizienz als die Anzeigeelemente B aufweisen können, wie es insbesondere bei einer Ausführung der Anzeigeelemente A als polarized OLED's Anzeigeelemente der Fall sein kann. Bei gleicher Ansteuerung hat also ein Anzeigeelement A eine größere Intensität als ein Anzeigeelement B. Dieser Intensitätsunterschied kann auf der Ebene der Treiberschaltung (vgl. Treiberschaltung 114 der Figur 3) oder durch eine vorherige Transformation der Bilddaten 124 kompensiert werden.

Zur Visualisierung der Information in dem Teilbereich 142 wird auf den Teilbereich 142 der Filter 108 aufgebracht, bei dem es sich hier um einen Polfilter handelt. Der Filter 108 wird so ausgerichtet, dass er eine zweite Polarisationsrichtung hat, die senkrecht auf der ersten Polarisationsrichtung steht, mit der die Anzeigeelemente A Strahlung abgeben. Dadurch wird die von den Anzeigeelementen A in den Teilbereich 142 ausgehende Strahlung ausgelöscht, nicht aber die von den Anzeigeelementen B ausgehende Strahlung, da diese ja nicht polarisiert ist. Aufgrund dessen erscheint dann in den Teilbereich 142 die Information "TEXT".

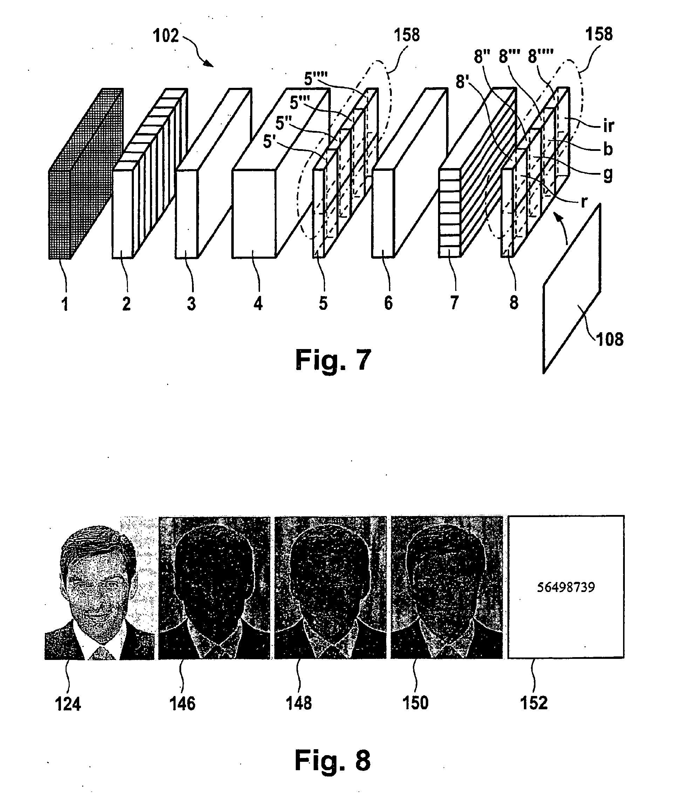

Die Figur 7 zeigt eine weitere Ausführungsform der Anzeigevorrichtung 102. Bei dieser Ausführungsform handelt sich um ein Farb-Flüssigkristall (LC) -Display mit einem zusätzlichen Sub-Pixel. Üblicherweise wird bei einem Farb-LC-Display nämlich jedes Bildelement (Pixel) durch drei Anzeigelemente (Sub-Pixel) gebildet, zum Beispiel für die Farben blau, grün und rot. Bei der hier betrachteten Ausführungsform hat jeder Pixel einen zusätzlichen Sub-Pixel zur Abstrahlung eines Signals in einem visuell nicht wahrnehmbaren spektralen Bereich.

Beispielsweise wird ein Pixel 158 der Anzeigevorrichtung 102 durch die Teilelektroden 5', 5", 5"' und 5"" gebildet, die den Spektralkomponenten rot (R), grün (G), blau (B) und IR entsprechen. Vor diesen Teilelektroden befinden sich entsprechende Farbfilter 8', 8", 8"', 8"", die rotes, grünes, blaues bzw. IR-Licht durchlassen. Bei dem Filter 8"" kann es sich zum Beispiel um einen Langpass-Filter handeln.

Beispielsweise werden die Teilelektroden 5', 5" und 5"' der Pixel 158 zur Wiedergabe von Bilddaten 124 angesteuert, die ein farbiges Passbild beinhalten, wie in der Figur 8 gezeigt. Das Passbild ergibt sich, wie an sich im Stand der Technik üblich, aus verschieden farbigen Teilbildern, zum Beispiel aus den Teilbildern 146, 148 und 150, in den roten, grünen und blauen Spektralbereichen, die sich einander überlagern.

Die Teilelektroden 5"" der Pixel 158 werden dagegen zur Wiedergabe von Bilddaten 125 angesteuert, die eine Information beinhalten, in dem hier betrachteten Beispielsfall die Angabe "56498739". Diese Information ist durch einen Benutzer ohne ein optisches Hilfsmittel nicht wahrnehmbar, da sie in einem nicht sichtbaren spektralen Bereich, hier im IR-Bereich, abgestrahlt wird.

Zur Sichtbarmachung der Information wird ein Filter 108 über die Anzeige 102 gebracht, wie in der Figur 7 dargestellt. Der Filter 108 ist als upconversion Filter ausgebildet, um die IR-Strahlung in einen sichtbaren Bereich zu transformieren, so dass auch das Teilbild 152 (vgl. Figur 8) für den Benutzer visuell wahrnehmbar wird. Je nach Ausführungsform des Filters 108 überlagert das Teilbild 152 die farbige Wiedergabe der Bilddaten 124. Der Filter 108 kann auch so ausgebildet sein, dass er Licht im sichtbaren Spektralbereich nicht durchlässt, so dass lediglich das Teilbild 152 sichtbar ist, wenn sich der Filter 108 vor der Anzeige 102 befindet.

### Bezugszeichenliste

- 1: Reflektor
- 2: Polarisator
- 3: Substrat
- 4: Schicht
- 5: Teilelektrode
- 5': Teilelektrode
- 5'': Teilelektrode
- 5''': Teilelektrode
- 5'''': Teilelektrode
- 6: Substrat
- 7: Polarisator
- 8: Filter
- 8': Filter
- 8'': Filter
- 8''': Filter
- 8'''': Filter
- 100: Dokument
- 101: Einbanddeckel
- 102: Anzeige
- 103: Seite
- 104: elektronische Schaltung
- 106: Benutzer
- 108: Filter
- 110: Lichtquelle
- 112: Lesegerät
- 114: Treiberschaltung
- 116: Chip
- 118: Schnittstelle
- 120: Speicher
- 122: Daten
- 124: Bilddaten
- 125: Bilddaten
- 126: Prozessor
- 128: Programminstruktionen
- 130: optischer Sensor
- 132: Schnittstelle
- 134: Prozessor
- 136: Steuerungsprogramm
- 138: Programminstruktionen
- 140: Anwendungsprogramm
- 142: Teilbereich
- 144: Teilbereich
- 146: Teilbild
- 148: Teilbild
- 150: Teilbild
- 152: Teilbild

## Patentansprüche

1. Dokument mit einer integrierten Anzeigevorrichtung (102), die in zumindest einem Teilbereich (142) so ausgebildet ist, dass mit Hilfe eines optischen Filters (108) eine von der Anzeigevorrichtung wiedergegebene Information visuell wahrnehmbar ist, wobei der Filter relativ zu der Anzeigevorrichtung bewegbar ist, **dadurch gekennzeichnet, dass** der Filter mit dem Dokument beweglich, insbesondere schwenkbar, drehbar oder verschiebbar verbunden ist, so dass der Filter wahlweise in eine erste oder eine zweite Position gebracht werden kann, wobei sich der Filter in der ersten Position über der Anzeigevorrichtung befindet, wobei sich der Filter in der zweiten Position außerhalb des Strahlengangs der Anzeigevorrichtung befindet und wobei das Dokument buchförmig ausgebildet ist, und der Filter auf einer Seite (103) des Dokuments angeordnet ist und wobei die Anzeigevorrichtung eine erste Teilmenge von Anzeigeelementen aufweist, die zur Abgabe von Licht in einem nicht wahrnehmbaren spektralen Bereich ausgebildet sind, und wobei die Anzeigevorrichtung eine zweite Teilmenge von Anzeigeelementen aufweist, die zur Abgabe von Licht in einem sichtbaren Spektralbereich ausgebildet sind und wobei der Filter zur Konversion des nicht wahrnehmbaren spektralen Bereichs in den wahrnehmbaren spektralen Bereich ausgebildet ist, wobei in der Anordnung der Anzeigeelemente der ersten und der zweiten Teilmengen die Information beinhaltet ist.

2. Dokument nach Anspruch 1, wobei der Filter so ausgebildet ist, dass Licht in dem sichtbaren Spektralbereich nicht durchgelassen wird.

3. Dokument nach Anspruch 1 oder 2, wobei die Anzeigevorrichtung zu einer farbigen Wiedergabe ausgebildet ist, wobei jedes farbige Bildelement der Anzeigevorrichtung durch drei Anzeigeelemente (8', 8", 8"') unterschiedlicher Farbe der zweiten Teilmenge konstituiert ist, wobei zumindest einige der Bildelemente ein viertes Anzeigeelement der ersten Teilmenge aufweisen.

4. Dokument nach einem der vorhergehenden Ansprüche, wobei die Anordnung der Anzeigeelemente der ersten und zweiten Teilmenge ein digitales Wasserzeichen und/oder einen Barcode beinhaltet, durch welches die Information codiert ist.

5. Dokument nach einem der vorhergehenden Ansprüche, wobei es sich bei der Information um ein Sicherheitsmerkmal, eine Personalisierungsinformation, einen kryptographischen Schlüssel und/oder ein Kennzeichen, insbesondere ein Kraftfahrzeugkennzeichen handelt.

## Claims

1. A document comprising an integrated display device (102) that is configured in at least one sub-region (142) such that an information item reproduced by the display device is visually perceptible with the aid of an optical filter (108), wherein the filter can be moved relative to the display device, **characterised in that** the filter is connected to the document movably, in particular pivotably, rotatably or slidably, such that the filter can be brought selectively into a first or a second position, wherein the filter in the first position is located above the display device, wherein the filter in the second position is located outside the optical path of the display device, and wherein the document is book-like, and the filter is arranged on one side (103) of the document, and wherein the display device has a first subset of display elements that are configured to emit light in an imperceptible spectral range, and wherein the display device has a second subset of display elements that are configured to emit light in a visible spectral range, and wherein the filter is configured for conversion of the imperceptible spectral range into the perceptible spectral range, wherein the information is contained in the arrangement of the display elements of the first and second sub-quantities.

2. The document according to Claim 1, wherein the filter is configured such that light in the visible spectral range is not allowed to pass through.

3. The document according to Claim 1 or 2, wherein the display device is configured for reproduction in colour, wherein each coloured image element of the display element is constituted by three display elements (8' , 8" , 8"') of different colour of the second subset, wherein at least some of the image elements have a fourth display element of the first subset.

4. The document according to one of the preceding claims, wherein the arrangement of the display elements of the first and second subset includes a digital watermark and/or a barcode, by means of which the information is coded.

5. The document according to one of the preceding claims, wherein the information is a security feature, personalised information, a cryptographic key and/or an identifier, in particular a motor vehicle registration.

## Revendications

1. Document avec un dispositif d'affichage intégré (102), dont au moins une région partielle (142) est conçue de manière à rendre perceptible une information visuelle reproduite par le dispositif d'affichage, à l'aide d'un filtre optique (108), dans lequel le filtre est déplaçable par rapport au dispositif d'affichage, **caractérisé en ce que** le filtre est relié au document de façon mobile, en particulier de façon pivotante, rotative ou coulissante, de telle façon que le filtre peut être mis au choix dans une première position ou dans une deuxième position, le filtre étant situé au-dessus du dispositif d'affichage dans la première position, le filtre étant situé à l'extérieur de la trajectoire des rayons du dispositif d'affichage dans la deuxième position, et le document étant conçu sous la forme d'un livre, et le filtre étant disposé d'un côté (103) du document, et le dispositif d'affichage comportant une première quantité partielle d'éléments d'affichage conçus pour émettre de la lumière dans une plage spectrale non perceptible, et le dispositif d'affichage comportant une deuxième quantité partielle d'éléments d'affichage conçus pour émettre de la lumière dans une plage spectrale visible, et le filtre étant conçu pour convertir la plage spectrale non perceptible en la plage spectrale perceptible, l'information étant contenue dans l'arrangement des éléments d'affichage des première et deuxième quantités partielles.

2. Document selon la revendication 1, dans lequel le filtre est conçu de manière à ne pas laisser passer la lumière dans la plage spectrale visible.

3. Document selon la revendication 1 ou 2, dans lequel le dispositif d'affichage est conçu pour une reproduction en couleur, dans lequel chaque élément d'image coloré du dispositif d'affichage est constitué de trois éléments d'affichage (8', 8", 8"') de couleurs différentes de la deuxième quantité partielle, dans lequel au moins quelques-uns des éléments d'image comportent un quatrième élément d'affichage de la première quantité partielle.

4. Document selon l'une des revendications précédentes, dans lequel l'arrangement des éléments d'affichage des première et deuxième quantités partielles contient un filigrane numérique et/ou un code barres permettant de coder l'information.

5. Document selon l'une des revendications précédentes, dans lequel l'information est une caractéristique de sécurité, une information de personnalisation, une clé cryptographique et/ou une immatriculation, en particulier une immatriculation de véhicule automobile.
